## Europäisches Patentamt
## European Patent Office
## Office européen des brevets

(19)

(11) Veröffentlichungsnummer: **0 199 842**
**B1**

(12) # EUROPÄISCHE PATENTSCHRIFT

(45) Veröffentlichungstag der Patentschrift:
21.09.88

(51) Int. Cl.⁴: **B 25 D 17/08**

(21) Anmeldenummer: **85109448.2**

(22) Anmeldetag: **27.07.85**

(54) Elektropneumatischer Drehschlagbohrhammer.

(30) Priorität: **02.05.85 DE 3515661**

(43) Veröffentlichungstag der Anmeldung:
**05.11.86 Patentblatt 86/45**

(45) Bekanntmachung des Hinweises auf die Patenterteilung:
**21.09.88 Patentblatt 88/38**

(84) Benannte Vertragsstaaten:
**CH DE FR GB LI NL**

(56) Entgegenhaltungen:
**EP-A-0 087 972**
**EP-A-0 108 411**
**EP-A-0 152 645**
**DE-A-2 653 082**

(73) Patentinhaber: **Licentia Patent- Verwaltungs- GmbH, Theodor- Stern- Kai 1, D-6000 Frankfurt/Main 70 (DE)**

(72) Erfinder: **Geis, Wilhelm, Dipl.- Ing. (FH), Mühlefeldstrasse 8, D-7057 Leutenbach (DE)**

(74) Vertreter: **Wolf, Otto, Dr. Ing., Licentia Patent- Verwaltungs- GmbH Theodor- Stern- Kai 1, D-6000 Frankfurt 70 (DE)**

EP 0 199 842 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein elektropneumatischer Drehschlagbohrhammer, bei welchem der den Werkzeugschaft beaufschlagende Döpper in der das Werkzeug aufnehmenden und in Drehung versetzenden Spindelhülse axial verschiebbar geführt ist und die Spindelhülse zwei in Umfangsrichtung gegeneinander versetzt angeordnete Durchbrechungen für die Aufnahme von Verriegelungselementen für die Verriegelung und Freigabe eines mit korrespondierenden Ausnehmungen versehenen Werkzeugschafts enthält und der aus dem Gehäuse des Drehschlagbohrhammers herausragende abtriebsseitige Endbereich der Spindelhülse einen Gewindeabschnitt für die Aufnahme einer mit einer korrespondierenden Mutter ausgerüsteten Werkzeugaufnahme besitzt, an den sich ein hohlzylindrisches Führungsteil anschließt, das mit Durchbrechungen für die Aufnahme der Verriegelungselemente versehen ist und wenigstens eine Ausnehmung zur Arretierung der Stellhülse bei verriegeltem Werkzeug aufweist.

Dieser Stand der Technik entspricht der EP-A-0 152 645, die unter Artikel 54 (3) EPÜ fällt.

Um mit einer derartigen Spindelhülse verschiedene Werkzeugaufnehmen vereinigen zu können, ist schon vorgeschlagen worden, im Anschluß an das hohlzylindrische Führungsteil einen Zentrierabschnitt mit verringertem Durchmesser vorzusehen bzw. das Führungsteil in einen solchen Abschnitt übergehen zu lassen.

Der vorliegenden Erfindung liegt die Aufgabe zugrunde, die Spindelhülse eines Drehschlagbohrhammers der eingangs erwähnten Art mit einem Geringstmaß an Aufwand dahingehend auszugestalten, daß sie über die durch die vorgeschlagene Spindelhülse gebotenen Möglichkeiten hinaus der Funktion einer Universal aufnahme gerecht wird, in der Heise, daß alle gängigen Werkzeugaufnahmen für Normalbohrer, Schlag und Hammerbohrer, ferner Winkelvorsätze, Schraubvorsätze, Gewindeschneidfutter usw. mit der Spindelhülse vereinigbar sind.

Zur Lösung dieser Aufgabe sieht die Erfindung vor, daß das Führungsteil mit wenigstens einer gegenüber den Durchbrechungen für die Verriegelungselemente in Umfangsrichtung räumlich versetzt angebrachten Längsnut versehen ist, die am abtriebsseitigen Ende des Führungsteils offen ausmündet.

Die Erfindung wird im nachstehenden anhand der Zeichnung, die einige Ausführungsbeispiele von mit der Spindelhüse vereinigten Werkzeugaufnahmen sowie mit einem Winkelvorsatz veranschaulicht, erläutert:
Es zeigen;

Fig. 1    eine Seitenansicht des abtriebsseitigen Bereichs eines Drehschlagbohrhammers mit freiem Spindelhülsenende,

Fig. 2    eine Ansichtdes abtriebseitigen Spindelhülsenendes gemäß Fig. 1 in Richtung A,

Fig. 3    eine Draufsicht auf das Spindelhülsenende nach Fig. 2 bei um 90° Verdrehter Spindelhülse,

Fig. 4    eine Ansicht entlang des Schnittes A-A durch Fig. 3,

Fig. 5    eine mit der Spindelhülse vereinigte Werkzeugaufnahme für einen Zweinut-Hammerbohrer im Längsschnitt,

Fig. 6    eine Ansicht längs des Schnittes B-B durch Fig. 5,

Fig. 7    eine mit der Spindelhülse vereinigte Werkzeugaufnahme (Dreibackenfutter) für Dreinut-Hammerbohrer und Normalbohrer,

Fig. 8    eine Ansicht entlang des Schnittes C-C durch Fig. 7,

Fig. 9    einen Querschnitt durch den Schaft eines Dreinut-Hammerbohrers,

Fig. 10   eine auf der Spindelhülse angebrachte Werkzeugaufnahme für Zweinut-Hammerbohrer mit radial verstellbaren Spannbacken im Längsschnitt,

Fig. 11   eine Werkzeugaufnahme entsprechend derjenigen nach Fig. 10, jedoch mit eingespanntem Normalbohrer,

Fig. 12   einen auf die Spindelhülse aufgesetzten Winkelbohrvorsatz im Längsschnitt.

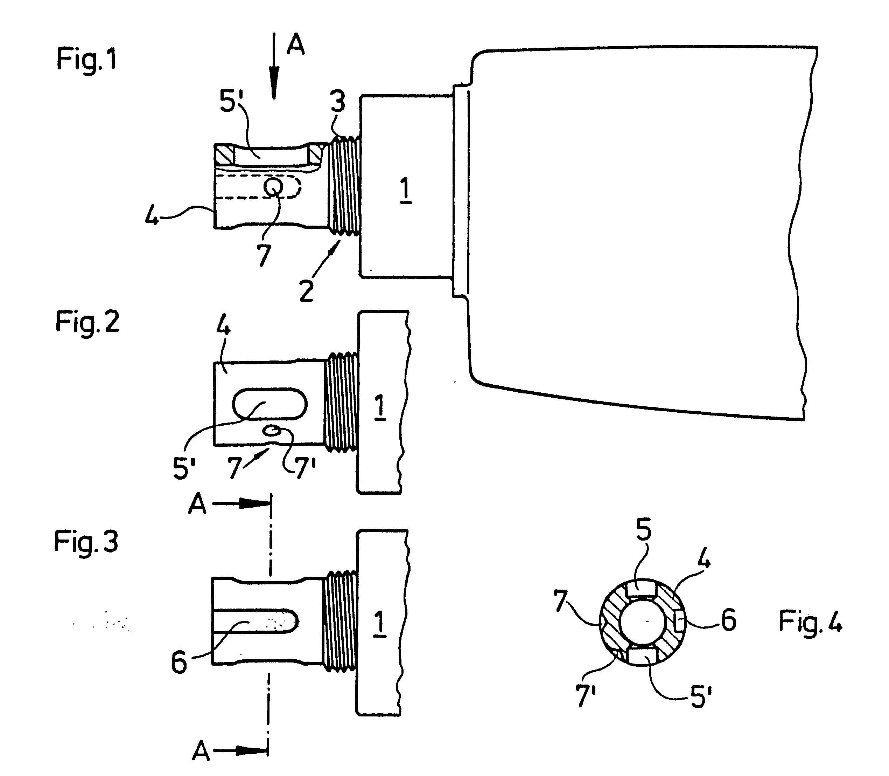

Wie die Figuren 1 bis 4 erkennen lassen, weist das axial aus dem Gehäuse bzw. aus dem Hals 1 des Drehschlagbohrhammers herausragende abtriebseitige Ende der Spindelhülse 2 einen Gewindeabschnitt 3 und ein sich daran anschließendes hohlzylindrisches Führungsteil 4 auf. Das Führungsteil 4 enthält zwei Durchbrechungen 5, 5', die in Umfangsrichtung räumlich um 180° gegeneinander versetzt angebracht sind. Des weiteren ist das Führungsteil 4 mit einer Längsnut 6 versehen, die beim Ausführungsbeispiel räumlich um 90° gegenüber den Durchbrechungen 5, 5' versetzt liegt und am abtriebsseitigen Ende des Führungsteils offen ausmündet. Außerdem sind im Führungsteil 4 zwei Ausnehmungen 7 und 7' angebracht, die in Umfangsrichtung gegeneinander versetzt und kalottenförmig oder als Sackbohrungen ausgebildet sind.

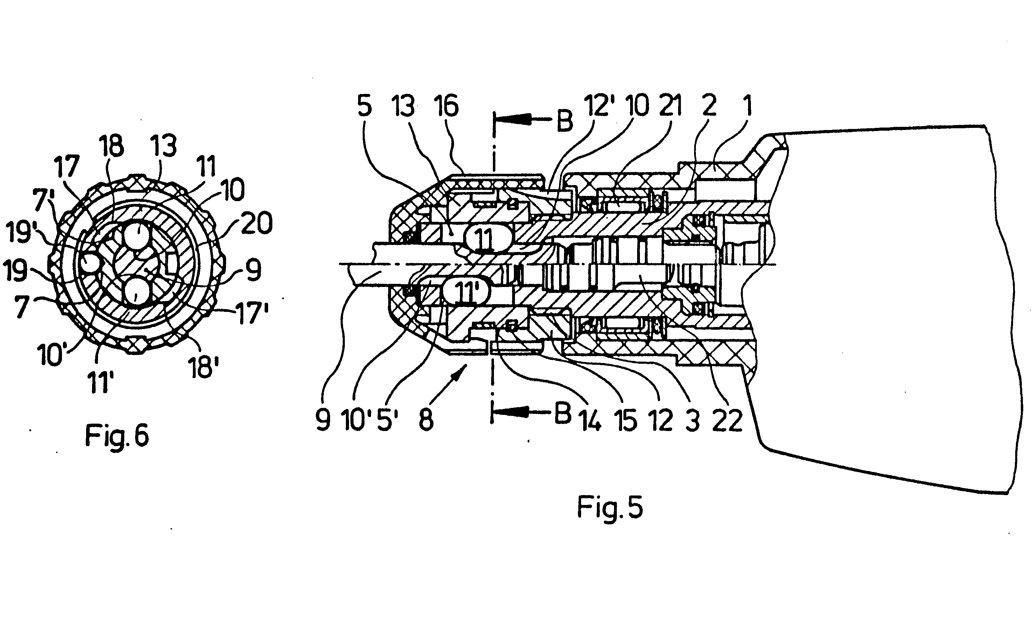

Im Falle des Ausführungsbeispieles gemäß den Figuren 5 und 6 ist mit der Spindelhülse 2 eine Werkzeugaufnahme 8 für einen Hammerbohrer 9 vereinigt, in dessen Schaft zwei Nuten 10, 10' für die Drehmitnahme und Führung des Bohrers vorgesehen sind, in welche die in den Durchbrechungen 5, 5' des Führungsteils 4 sitzenden Verriegelungselemente 11, 11' eingreifen.

Die Nuten 10 und 10' sind dabei axial länger bemessen als die Verriegelungselemente 11 und 11', um eine axiale Beweglichkeit des Werkzeugs bzw. des Hammerbohrers 9 zu gewährleisten. Mit der Werkzeugaufnahme ist eine Mutter 12 vereinigt, mittels derer die Werkzeugaufnahme auf den Gewindeabschnitt 3 der Spindelhülse aufschraubbar bzw. aufgeschraubt ist. Damit ist die Werkzeugaufnahme zugleich auch axial fixiert. Auf dem zylindrischen Führungsteil 4 der Spindelhülse 2 ist eine Stellhülse 13 in Umfangsrichtung und relativ zur Mutter 12, die wenigstens eine Nut 12' zum Festziehen enthält, verdrehbar geführt. Die Stellhülse 13 ist mittels eines in eine Ringnut 14 der Mutter eingesetzten Sicherungsrings 15 (Seegerring) gegen Axialverschiebung gesichert. Die Stellhülse 13 ist mit einem von außen zugängigen Stellring 16 mechanisch verbunden.

Wie aus Figur 6 ersichtlich ist, enthält die Stellhülse 13 zwei einander diametral gegenüberliegende Ausnehmugen 17, 17', in welche die Verriegelungselemente 11 und 11' bei entsprechender Position der Stellhülse 13 radial ausweichen können, wodurch der Werkzeugschaft freigegeben und ein Herausziehen des Hammerbohrers 9 aus der Werkzeugaufnahme ermöglicht wird. Die Ausnehmungen 17 und 17' sind dabei zweckmäßigerweise mit Auf- oder Einlaufschrägen 18 und 18' versehen.

In der in Fig. 6 dargestellten Lage der Stellhülse 13 werden die in die Nuten 10 und 10' des Werkzeugschafts eingreifenden Verriegelungselemente 11 und 11', die hier als Walzen ausgebildet sind, am radialen Ausweichen nach außen hin gehindert, so daß das Werkzeug, also hier der Hammerbohrer, verriegelt ist. Zur lagerichtigen Einstellung der Stellhülse 13 ist eine in einer Bohrung 19 der Stellhülse befindliche Arretierkugel 19' vorgesehen. Diese Kugel steht unter der Wirkung einer Ringfeder 20 und rastet in der das Werkzeug verriegelnden Position der Stellhülse in die Ausnehmung 7 der Spindelhülse ein, in der das Werkzeug freigebenden Lage der Stellhülse hingegen in die Ausnehmung 7' der Spindelhülse.

Der in der im Hals des Drehschlagbohrhammers mittels eines Rollenlagers 21 drehbar gelagerten Spindelhülse 2 geführte Döpper ist mit 22 bezeichnet. Der Antrieb der Spindelhülse 2 erfolgt auf die bei solchen Drehschlagbohrhämmern übliche Weise, desgleichen der Antrieb des pneumatischen Schlagwerks.

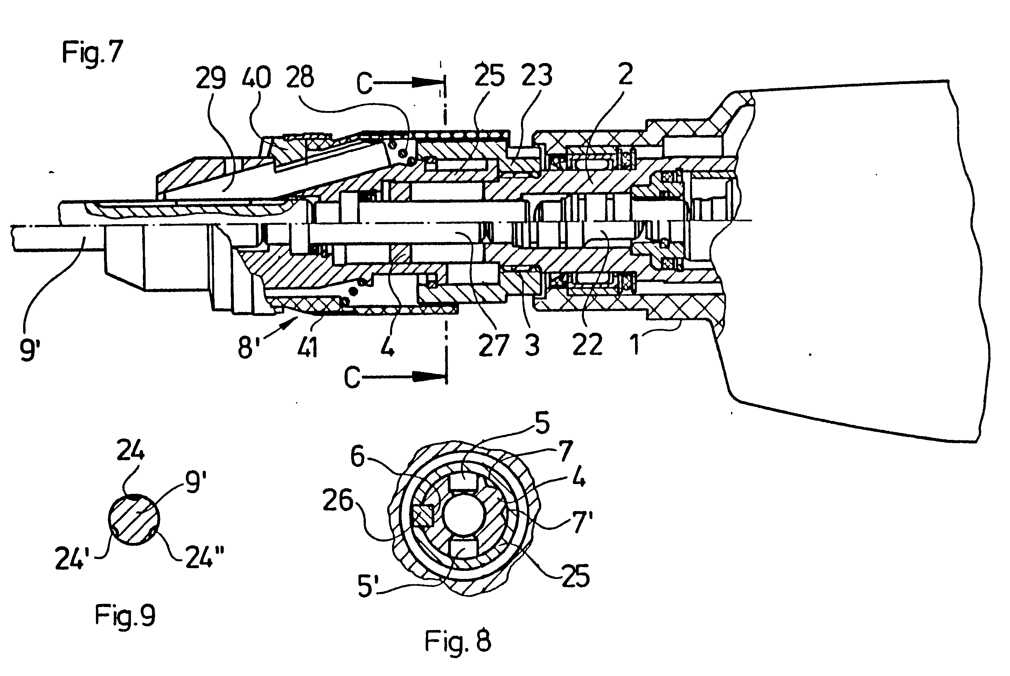

Die Figuren 7 bis 9 veranschaulichen eine mit der Spindelhülse 2 vereinigte Werkzeugaufnahme 8' in Form eines Dreibackenfutters für ein mit drei am Umfang gleichmäßig verteilt angeordneten Nuten 24, 24' und 24'' versehenes Werkzeug 9' (Hammerbohrer). Die mechanische Verbindung dieser Werkzeugaufnahme mit der Spindelhülse und die axiale Fixierung der Werkzeugaufnahme erfolgen hier mit Hilfe einer mit dem Futterkörper 25 vereinigten Nutmutter 23, die auf den Gewindeabschnitt 3 des Führungsteils 4 der Spindelhülse 2 aufgeschraubt ist.

Der Futterkörper 25 ist, wie Fig. 8 zeigt, mit einer Feder 26 (Keil) versehen, die in die Nut 6 des Führungsabschnitts 4 der Spindelhülse eingreift. Dadurch ist die Werkzeugaufnahme kraftschlüssig mit der Spindelhülse verbunden. Die Nutmutter 23 ist relativ zum Futterkörper frei drehbar.

Zwischen dem Döpper 22 und dem Werkzeug befindet sich bei dieser Werkzeugaufnahme ein Stößel 27, der die vom Döpper erhaltenen Schläge auf die Stirnfläche des Werkzeugs überträgt. Die Werkzeugaufnahme ist auf der Spindelhülse axial frei verschiebbar, wobei nur in der oberen Hälfte der in Figur 7 gezeigten Andrückposition eine Beaufschlagung des Döppers 22 durch den Schlagkörper 39 erfolgt.

Die Zustellung der Backen 29 erfolgt durch Drehung des Zahnkranzes 40, wobei zur Arretierung der jeweiligen Backenposition die mit dem Futterkörper drehfest verbundene Arretierhülse 41, unterstützt durch die Feder 28, dient. Die Arretierhülse ist zu diesem Zweck mit einer entsprechenden, hier nicht dargestellten Stirnverzahnung versehen, welche in korrespondierende Ausnehmungen im Zahnkranz eingreift.

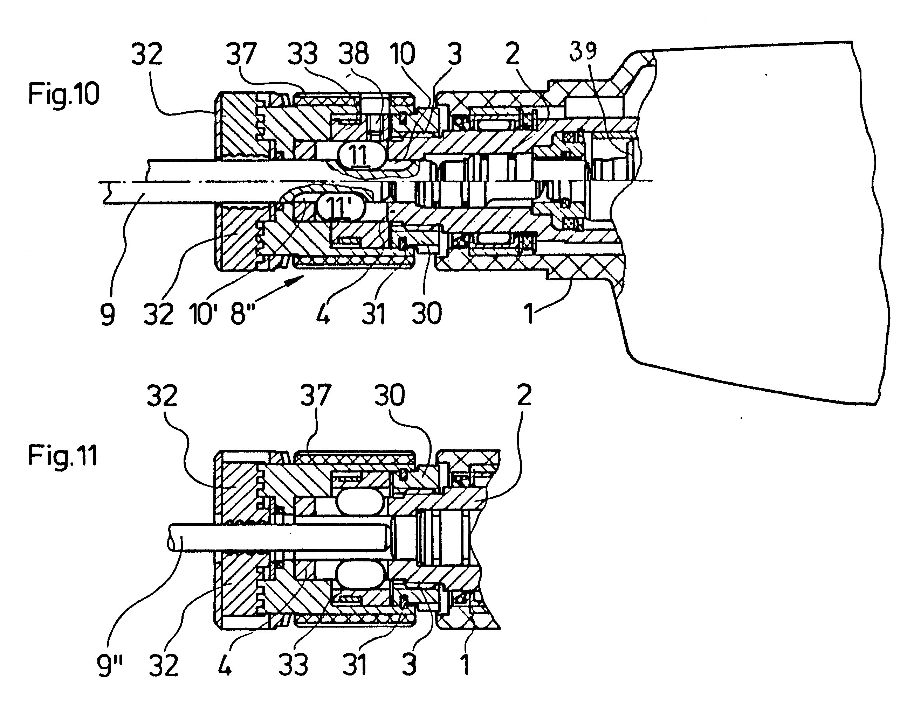

Beim Ausführungsbeispiel gemäß den Figuren 10 und 11 ist mit der Spindelhülse 2 bzw. mit deren Führungsteil 4 eine radial verstellbare Werkzeugaufnahme in Form eines Dreibackenfutters 8' vereinigt. Das Dreibackenfutter ist mittels einer relativ zum Futterkörper frei drehbaren Nutmutter 30 auf den Gewindeabschnitt 3 des Führungsteils 4 aufgeschraubt. Der Futterkörper ist mittels eines Sicherungsringes 31 (Seegerring) mit der Nutmutter mechanisch gekoppelt. Im Hammerbohrbetrieb (siehe Fig. 10) wird der Hammerbohrer 9, der auch hier einen mit zwei Nuten 10, 10' versehenen Schaft aufweist, lediglich durch die Verriegelungselemente 11 und 11' axial geführt, wobei die Drehmomentübertragung ebenfalls mittels der Verriegelungselemente erfolgt. Die Spannbacken 32 stehen dabei außer Eingriff mit dem Bohrerschaft.

Bei der Verwendung eines Normal bohrers 9'' mit rein zylindrischem Schaft wird die Stellhülse 33 mittels des Stellrings 37, der über eine Schraube 38 mit ihr verbunden ist, in die Position für die Freigabe der Verriegelungselement gebracht und der Normalbohrer ausschließlich durch die Spannbacken 32 in seiner Lage gehalten.

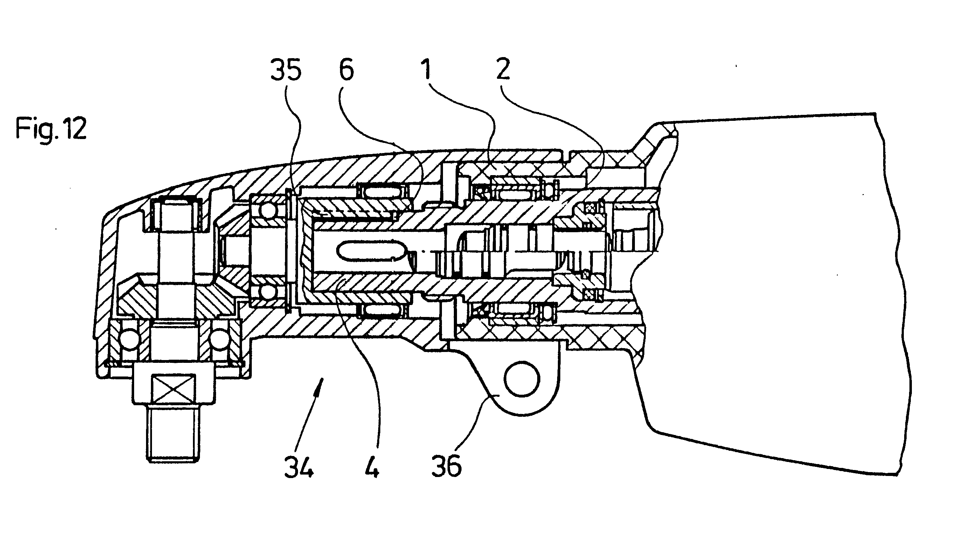

Fig. 12 zeigt einen Drehschlagbohrhammer mit einem auf dem Führungsteil 4 der Spindelhülse 2 angebrachten Winkelbohrvorsatz 34. Der Winkelbohrvorsatz enthält einen Innenkeil 35, der in die Nut 6 des Führungsabschnitts eingeschoben ist, wodurch eine kraft- und formschlüssige Verbindung zwischen der Spindelhülse und dem Winkel bohrvorsatz erzielt ist. Die Halterung des Winkelbohrvorsatzes auf

dem Spannhals 1 des Drehschlagbohrhammers erfolgt mittels der Klemmlasche 36. Zum Bohrbetrieb wird das Schlagwerk abgeschaltet. Entsprechend der Vereinigung des Winkelbohrvorsatzes mit einem Drehschlagbohrhammer können auch andere, mit einer in die Nut 6 des Führungsteils 4 der Spindelhülse 2 eingreifenden Feder 26 (Keil) versehene Vorsätze wie Schraubvorsätze, Gewindeschneidfutter etc. kombiniert werden.

Die Längsnut 6 im Führungsteil der Spindelhülse kann rechteckförmigen, halbkreisförmigen, schwalbenschwanzförmigen oder einen sonst geeigneten Querschnitt aufweisen.

**Patentansprüche**

1. Elektropneumatischer Drehschlagbohrhammer, bei welchem der den Werkzeugschaft beaufschlagende Döpper (22) der das Werkzeug (9) aufnehmenden und in Drehung versetzenden Spindelhülse (2) axial verschiebbar geführt ist und die Spindelhülse (2) zwei in Umfangsricht gegeneinander versetzt angeordnete Durchberechungen (5, 5') die Aufnahme von Verriegelungs elementen (11, 11') für die Verriegelung und Freigabe eines mit korrespondierenden Ausnehmungen (10, 10') Werkzeugschafts enthält und der aus dem Gehäuse des Drehschlagbohrhammers herausragende abtriebsseitige Endbereich der Spindelhülse (2) einen Gewindeabschnitt (3) die Aufnahme einer mit einer korrespondierenden Mutter (12) ausgerüsteten Werkzeugaufnahme (8) besitzt, an den sich ein hohlzylindrisches Führungsteil anschließt, das mit Durchbrechungen (5, 5') für die Aufnahme der Verrieglungselemente (11, 11') versehen ist und wenigstens eine Ausnehmung (7, 7') zur Arretierung der Stellhülse (13) bei verriegletem Werkzeug (9) aufweist, wobei das Führungsteil (4) mit wenigstens einer gegenüber den Durchbrechungen (5, 5') für die Verriegelungselemente (11, 11') in Umfangsrichtung räumlich versetzt angebrachten Längsnut (6) versehen ist, die am abtriebseitigen Ende des Führungsteils (4) offen ausmündet.

2. Drehschlagbohrhammer nach Amspruch 1, dadurch gekennzeichnet, daß die Längsnut (6) rechteckförmigen Querschnitt aufweist.

3. Drehschlagbohrhammer nach Anspruch 1, dadurch gekennzeichnet, daß die Längsnut (6) halbkreisförmigen Querschnitt besitzt.

4. Drehschlagbohrhammer nach Anspruch 1, dadurch gekennzeichnet, daß die Längsnut (6) schwalbenschwanzförmige Querschnittsform aufweist.

**Claims**

1. An electropneumatic rotary percussion drill hammer, in which the anvil (22) impinging on the tool shank is guided in an axially slidable manner in the spindle sleeve (2) which accommodates the tool (9) and is rotated, and the spindle sleeve (2) contains two through holes (5, 5') arranged displaced with respect to each other in the peripheral direction for the mounting of locking elements (11, 11') for the locking and release of a tool shank provided with corresponding recesses (10, 10') and the driven side end region of the spindle sleeve, which sleeve projects out of the housing of the rotary percussion drill hammer, has a threaded section (3) for mounting a tool mount (8) equipped with a corresponding nut (12), and to which i5 connected a hollow cylindrical guide part, which is provided with through holes (5, 5') for the mounting of the locking elements (11, 11') and has at least one recess (7, 7') for retaining the adjustment sleeve (13) when the tool (9) is locked, wherein the guide part (4) is provided with at least one longitudinal groove (6) arranged spatially displaced in the peripheral direction with respect to the through holes (5, 5') for the locking elements (11, 11') , whch longitudinal groove (6) is open at the drive end o the guide part (4).

2. A rotary percussion drill hammer according to claim 1, characterized in that the longitudinal groove (6) has a rectangular cross-section.

3. A rotary percussion drill hammer according to claim 1, characterized in that the longitudinal groove (6) has a semi-circular cross-section.

4. A rotary percussion drill hammer according to claim 1, characterized in that the longitudinal groove (6) has a dove-tail cross-section.

**Revendications**

1. Perforateur à percussion électropneumatique dans lequel la bouterolle (22) qui agit sur la tige de l'outil (9) est guidée de manière à pouvoir se déplacer dans le sens axial dans la douille de broche (2) qui reçoit l'outil (9) et le fait tourner, dans lequel la douille de broche (2) comporte deux ouvertures de passage (5, 5') décalées l'une par rapport à l'autre dans le sens de la périphérie, et destinées à recevoir des éléments de verrouillage (11, 11') assurant le verrouillage et le dégagement d'une tige d'outil munie d'évidements correspondants (10, 10') et dans lequel l'extrémité de la douille de broche (2) qui, du côté entraîné, dépasse hors de l'enveloppe du perforateur à percussion comporte un secteur fileté (3) qui est destiné à recevoir un organe de réception (8) de l'outil muni d'un écrou correspondant (12) et auquel se raccorde une partie de guidage en forme de cylindre creux qui est munie d'ouvertures de passage (5, 5') destinées à recevoir les éléments de verrouillage (11, 11') et comporte au moins un évidement (7, 7') assurant le blocage de la douille de mise en place (13) lorsque l'outil (9) est verrouillé, dans lequel la partie de guidage (4) comporte au moins une rainure longitudinale (6) qui est décalée dans le sens de la périphérie par rapport aux ouvertures de passage (5, 5') destinées aux éléments de verrouillage (11, 11') et qui débouche à l'extrémité de la partie de guidage (4) située du côté entraîné.

2. Perforateur à percussion selon la revendication 1, caractérisé en ce que la rainure longitudinale (6) présente une section transversale rectangulaire.

3. Perforateur à percussion selon la revendication 1, caractérisé en ce que la rainure longitudinale (6) présente une section transversale semi-circulaire.

4. Perforateur à percussion selon la revendication 1, caractérisé en ce que la rainure longitudinale (6) présent une section transversale en queue d'aronde.

Fig.1

Fig.2

Fig.3

Fig.4

Fig. 6

Fig. 5

0 199 842

Fig. 7

Fig. 9

Fig. 8

0 199 842

Fig.10

Fig.11

Fig.12

0 199 842